# EUROPEAN PATENT APPLICATION

(11) **EP 3 651 066 A1**
(43) Date of publication of application: **13.05.2020**
(21) Application number: 17916748.1
(22) Date of filing: 24.11.2017
(51) Int. Cl.: G06K 9/32, G01S 17/02

(54) **CAMERA-INTEGRATED LASER DETECTION DEVICE AND OPERATING METHOD THEREFOR**

(30) Priority: 06.07.2017 KR 20170085949
(71) Applicant: Traworks, Jeonju-si, Jeollabuk-do 54886 (KR)
(72) Inventor: AHN, Soon Hyun, Anyang-si, Gyeonggi-do 14057 (KR); JUNG, Cheol, Anyang-si, Gyeonggi-do 14057 (KR)
(74) Representative: Roos, Peter
(86) International application number: PCT/KR2017/013472
(87) International publication number: WO 2019/009474

(57) **Abstract**

The present invention relates to a camera-integrated laser detection device. According to the present invention, there is provided a camera-integrated laser detection device including a laser unit that emits and receives a laser signal, a photographing unit that photographs and provides a image, a setting unit that sets a detection region for detecting a vehicle by using the laser signal and a region of interest for detecting the vehicle by using the image in the image, and a control unit that provides detection information on a corresponding vehicle, when the vehicle is detected in at least one region of the region of interest and the detection region. According to the present invention, a laser and a camera are integrally formed, detection efficiency of a vehicle is increased by using at least one detection result of the laser and the camera, and detection accuracy may also be increased.

## Description

### Technical Field

The present invention relates to a camera-integrated laser detection device and an operation method thereof, more specifically, a camera-integrated laser detection device and an operation method thereof capable of detecting a vehicle by installing on a road.

### Background Art

In general, a vehicle number recognition system detects a vehicle by using various sensors and equipment installed on a road, obtains a vehicle speed, a traffic volume, and the like, and provides the obtained information to a traffic operation center through a wired or wireless communication network.

Here, the vehicle number recognition system includes a vehicle detection unit for detecting a vehicle driving on a road, and an information acquisition unit for acquiring vehicle information for the detected vehicle.

At this time, the vehicle detection unit detects the traffic of vehicle by using a loop sensor, a laser, an infrared ray, a camera, and the like, and the information acquisition unit acquires the vehicle information including a vehicle number, a vehicle type, and the like by using mainly the camera.

A typical sensor used as the vehicle detection unit is the loop sensor, which has an advantage of accurate vehicle detection and easy detection.

However, since the roof sensor must be buried in the ground, construction and maintenance are difficult and there is a problem that it is damaged by the load of the vehicle.

As a sensor for replacing this, an optical sensor using a lidar, a laser, and the like is used. However, despite the advantages of a very simple installation and equipment and high detection accuracy, there is a problem that the accuracy is significantly lower in bad weather conditions such as snow or rain.

Therefore, there is an urgent need for the development of a new detection device that improves the problems of the conventional detection unit.

The background technology of the present invention is disclosed in Korea Patent Registration No. 10-1475062 (December 22, 2014 notification).

### DISCLOSURE

### Technical Problem

An object of the present invention is to provide a camera-integrated laser detection device and an operation method thereof, which may be configured to integrate a laser and a camera in an integrated manner to effectively detect a vehicle driving on a road and increase detection accuracy.

### Technical Solution

The present invention provides a camera-integrated laser detection device including a laser unit that emits and receives a laser signal, a photographing unit that photographs and provides a image, a setting unit that sets a detection region for detecting a vehicle by using the laser signal and a region of interest for detecting the vehicle by using the image, in the image, and a control unit that provides detection information on a corresponding vehicle, when the vehicle is detected in at least one region of the region of interest and the detection region.

In addition, the setting unit may adjust at least one of a position, a length, and a width of the detection region corresponding to at least one of an angle and a height of the laser unit.

In addition, the control unit may provide detection information of the vehicle by using at least one information of information detected by processing an image for the region of interest of the image and information detected through the laser signal in the detection region.

In addition, the control unit may calculate and provide speed of the vehicle based on information detected in each of the region of interest and the detection region when the region of interest and the detection region are separated from each other by a predetermined distance.

In addition, a separation distance between the detection region and the region of interest may be within 10 m.

In addition, the camera-integrated laser detection device may further include an output unit that provides the detection information to a recognition device for recognizing a vehicle number based on an image corresponding to the detection information.

In addition, the recognition device may photograph the image corresponding to the detection information, and recognize the vehicle number from the image by using an image processing algorithm stored in advance.

According to the present invention, there is provided an operation method of a camera-integrated laser detection device including a laser unit and a photographing unit, the method including emitting and receiving a laser signal through a laser unit to detect a vehicle, and photographing a image by using the photographing unit, setting a detection region for detecting the vehicle by using the laser signal and a region of interest for detecting the vehicle by using the image in the image, and providing detection information for a corresponding vehicle when the vehicle is detected in at least one region of the region of interest and the detection region.

In addition, the operation method of a camera-integrated laser detection device may further include adjusting at least one of a position, a length, and a width of the detection region corresponding to at least one of an angle and a height of the laser unit.

In addition, in the providing the detection information of a vehicle, detection information of the vehicle may be provided by using at least one information of information detected by processing an image for the region of interest of the image and information detected through the laser signal in the detection region.

In addition, speed of the vehicle may be calculated and provided based on information detected in each of the region of interest and the detection region when the region of interest and the detection region are separated from each other by a predetermined distance.

In addition, a separation distance between the detection region and the region of interest may be within 10 m.

In addition, the operation method of a camera-integrated laser detection device may further include providing the detection information to a recognition device for recognizing a vehicle number based on an image corresponding to the detection information.

In addition, the recognition device may photograph the image corresponding to the detection information, and may recognize the vehicle number from the image by using an image processing algorithm stored in advance.

### Advantageous Effects

According to the present invention, a laser and a camera are integrally formed and at least one detection result obtained by the laser and the camera may be used to increase the detection efficiency of the vehicle and to increase the detection accuracy.

In addition, since the present invention may detect the detection information of the vehicle by using the remaining detection results even if the detection results of any one of the laser or the camera is missing, it is possible to minimize detection missing and it is possible to increase the detection accuracy of the vehicle by combining detection results of the laser and the camera.

### Description of Drawings

Fig. 1 is a diagram showing a state in which a camera-integrated laser detection device according to an embodiment of the present invention is installed on a road.
Fig. 2 is a diagram showing a configuration of the camera-integrated laser detection device as shown in Fig. 1.
Fig. 3A and Fig. 3B are diagrams showing a state in which a detection region and a region of interest are set and provided in an image in an exemplary embodiment of the present invention.
Fig. 4 is a diagram explaining an operation method of the camera-integrated laser detection device according to an embodiment of the present invention.

### Best Mode for Invention

Hereinafter, exemplary embodiments of the present invention will be described in detail with reference to the accompanying drawings so that those skilled in the art may easily implement the present invention.

In the present invention, a laser is a device for emitting light (electromagnetic waves) having a wavelength within a predetermined range, and may be a concept including all equipment for emitting light having a predetermined wavelength, such as a lidar.

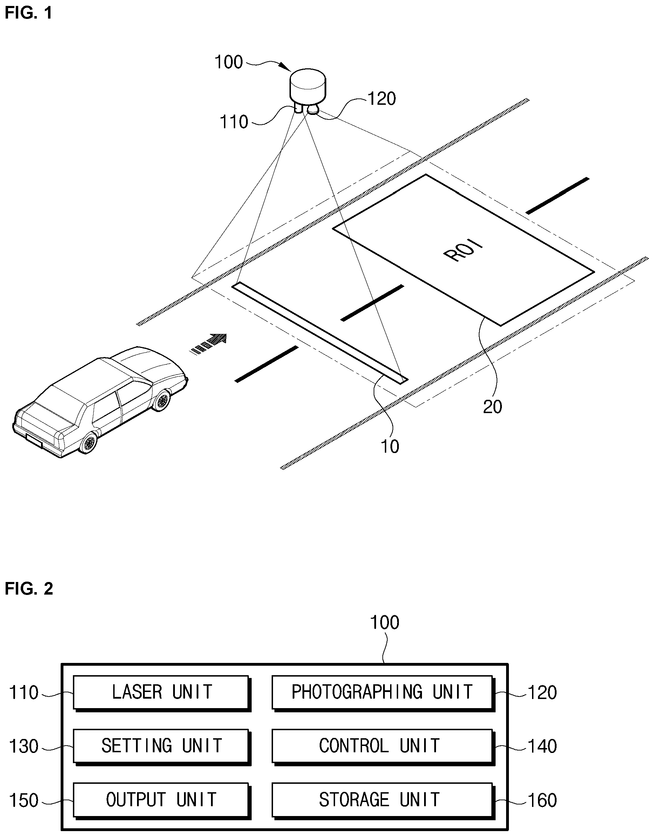

Fig. 1 is a diagram showing a state in which a camera-integrated laser detection device according to an embodiment of the present invention is installed on a road.

As shown in Fig. 1, a camera-integrated laser detection device 100 according to an embodiment of the present invention is installed on a road, detects a vehicle driving on the road, and provides detection information.

The camera-integrated laser detection device 100 acquires the detection information of a vehicle by using at least one of a laser and a camera, and for this purpose, may have a structure in which the laser and the camera are integrally mounted in a case. At this time, the camera may be installed on one side of the laser.

The camera-integrated laser detection device 100 may detect the vehicle in a detection region 10 on the road by using the laser. In addition, the camera-integrated laser detection device 100 may detect the vehicle in the region of interest 20 by using the camera photographing an image including a detection region 10 and a region of interest 20.

Here, the detection region 10 and the region of interest 20 may be disposed apart from each other by a predetermined distance, or the detection area 10 may be included in the region of interest 20.

The camera-integrated laser detection device 100 may determine that the same vehicle is detected in each of the regions 10 and 20 if the difference of times (hereinafter, time difference) at which the vehicle is detected is within a predetermined time in each of the detection region 10 and the region of interest 20, and when it is confirmed that the vehicle is the same vehicle, the driving speed of the vehicle may be further obtained based on the time difference and a separation distance between the regions 10 and 20.

On the other hand, the detection region 10 and the region of interest 20 may be overlapped with each other, and when overlapping, since the vehicle may be detected in each of the detection region 10 and the region of interest 20, the detection rate may be greatly increased by minimizing the decrease in detection rate caused by environmental factors.

The camera-integrated laser detection device 100 may provide an image and the detection information including the detection region 10 and the region of interest 20 to an operation server (not shown) or a site peripheral device (not shown) through a wired or wireless communication network.

Here, the camera-integrated laser detection device 100 may provide a region corresponding to the detection region 10 of the laser in an identifiable form in an image. At this time, an emission region of the laser and the detection region 10 in the image may be set in advance.

Through this, since an operator may visually check the emission region of the laser, that is, the detection region, in the image, installation and setting of the laser are easily performed.

In such an embodiment of the present invention, since a laser and a camera are integrally configured and the vehicle is detected by using at least one of the laser and the camera, the detection efficiency of the vehicle is increased and the problem of missing detection is minimized. In addition, the embodiment of the present invention facilitates on-site installation and setting by providing and displaying virtually the emission region of the laser signal through the photographed image.

Fig. 2 is a diagram showing a configuration of the camera-integrated laser detection device shown in Fig. 1.

As shown in Fig. 2, the camera-integrated laser detection device 100 according to an embodiment of the present invention includes a laser unit 110, a photographing unit 120, a setting unit 130, the control unit 140, an output unit 150, and a storage unit 160.

The laser unit 110 includes the laser, emits a laser signal toward a detection region 10 on a road, and receives a reflection signal corresponding to the emitted signal. At this time, the laser unit 110 may provide a laser signal emission time and a reflection signal receiving time to the control unit 140.

Here, the detection region 10 indicates a laser emission region for detecting the vehicle by using the laser signal.

The photographing unit 120 includes the camera, photographs an image including the detection region 10 and the region of interest 20 (ROI) set by the setting unit 130, and provides the photographed image to the control unit 140.

At this time, the region of interest 20 indicates a region for detecting the vehicle by using the image.

Meanwhile, the region of interest 20 is present at a position separated from the detection region 10 by a predetermined distance, and may be overlapped with the detection region 10 to include the detection region 10. Here, when the region of interest 20 and the detection region 10 are separated apart from each other, a separation distance L may have a range within 10 m. At this time, the separation distance may mean a distance between the centers of the regions 10 and 20.

The setting unit 130 sets positions and sizes of the detection region 10 and the region of interest 20 in an image. Here, the setting unit 130 may display and provide the detection region 10 and the region of interest 20 which are set in an image of the photographing unit 120.

At this time, the setting unit 130 may adjusts at least one of a position, a length H, and a width of the detection region 10 by corresponding to at least one of an angle and a height of the laser unit 110.

Of course, the setting unit 130 may reflect changes in the detection region 10 in the image in real time based on the adjusted information.

The control unit 140 determines whether or not the vehicle is detected based on information received from each of the laser unit 110 and the photographing unit 120. That is, the control unit 140 determines whether or not the vehicle is detected based on information detected in at least one region of the detection region 10 and the region of interest 20. Therefore, even if the vehicle is detected in only one region of both regions 10 and 20 the vehicle, the control unit 140 may check and provide the detection of the vehicle.

At this time, the control unit 140 may provide the detection information of a vehicle (for example, detection of vehicle and detection time, and the like) using at least one information of the detection information obtained by detecting the vehicle by using the reflection signal corresponding to the laser signal emitted from the laser unit 110 in the detection region 10, and the detection information obtained by processing and detecting the region of interest 20 of the image as an image.

At this time, the control unit 140 receives an emission time and a response time of the laser signal from the laser unit 110, detects the vehicle by comparing the emission time and the response time that are received, and detects the vehicle by processing the image in the region of interest 20 through a predetermined image processing algorithm.

When the same vehicle is detected the detection region 10 and the region of interest 20 (when the same vehicle is detected within predetermined time range in two regions), the control unit 140 may provide the detection information of a vehicle by using one selected detection result or combining two detection results.

At this time, the detection result may include the detection of the vehicle or the detection time. In addition, in a case of combining two detection results, the detection time in two regions may be averaged or provided, or the detection result in two regions may be matched and provided to the photographed image, respectively.

In addition, when the detection region 10 and the region of interest 20 are separated apart from each other, the control unit 140 calculates the speed of the vehicle based on the vehicle detection time detected in the detection region 10, the vehicle detection time detected in the region of interest 20, and the distance L between the detection region 10 and the region of interest 20. That is, the control unit 140 may provide not only the detection information of a vehicle but also the speed of the vehicle.

The output unit 150 includes a wired or wireless communication means, and may provide an image and the detection information through the communication means to an operation server (not shown), field peripherals, or the like. At this time, the image may include an image in which the detection region 10 and the region of interest 20 are set in addition to the original image.

Here, the site peripheral device includes devices installed around the site such as a vehicle number recognition device and a signal controller.

In particular, the vehicle number recognition device may include a device for recognizing a vehicle number from an image corresponding to the detection information, and may include a camera for recognizing the vehicle number including an image processing algorithm capable of recognizing the vehicle number. At this time, the camera for recognizing the vehicle number may acquire a vehicle image corresponding to the detection information received from the control unit 140, and may provide by recognizing the vehicle number from the acquired image.

The storage unit 160 may match the detection result of the control unit 140 with the photographed image and store the matched result, and provide the stored information to the site peripheral device (not shown) and an operation server (not shown).

Such a camera-integrated laser detection device 100 has an advantage of solving non-detection, miss-detection, over-detection, and the like by complementing the problems caused when using each of a laser detection device and an image detection device individually.

In particular, it is possible to effectively improve over-detection errors (errors detected more than actual number of vehicles) caused by measurement errors in connection parts of large vehicles and special vehicles such as trailer vehicles, miss-detection errors caused by environmental factors such as snow and rain, which occurred when only laser detection device is used, and the like.

In addition, it is possible to effectively improve problems caused by image detection such as miss-detection due to light reflection of light, sunlight, and the like, and non-detection due to an image processing error (error due to environmental conditions, device malfunction, and the like), which occurred when only the image detection device is used.

In addition, the camera-integrated laser detection device has an advantage that the detection accuracy may be significantly increased while making installation and setting easier by displaying and providing the detection region and the region of interest in an image.

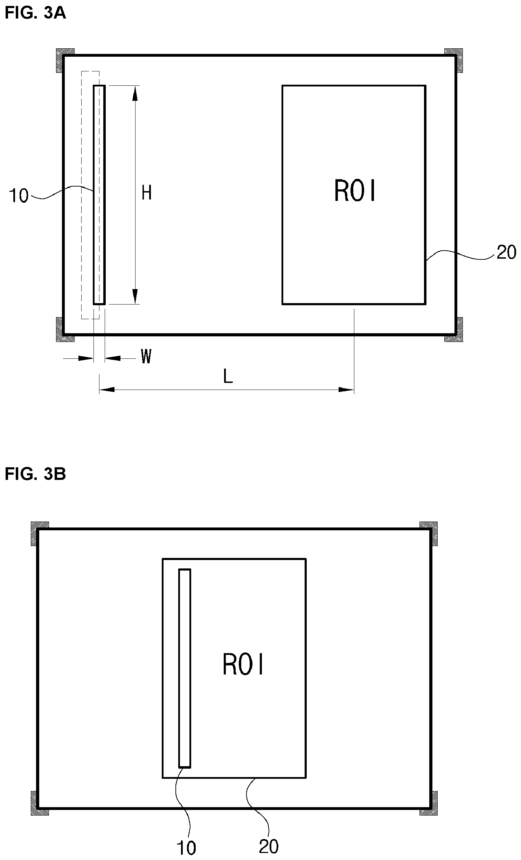

Fig. 3A and Fig. 3B are diagrams showing a state in which the detection region and the region of interest are set and provided in an image in the embodiment of the present invention.

As shown in Fig. 3A and Fig. 3B, the setting unit 130 may process and display a region corresponding to the detection region 10 by the laser unit 110 in an image in at least one form of an image, a figure, and a color. Of course, the setting unit 130 may also provide the region of interest 20 by the photographing unit 120 through the same method.

In this way, since the setting unit 130 displays and provides a region of the laser signal which is not visually confirmed in the image, the installation and setting work of the operator are greatly facilitated and the work efficiency increases.

Fig. 3A is an example showing a case in which the detection region 10 and the region of interest 20 are separated from each other. In a case of a dotted line region, the position and size of the detection region 10 are changed by adjusting the angle and height of the laser unit 110. As the height of the laser unit 110 decreases and the angle moves, the area of the detection region 10 increases, and the position of the detection region 10 also moves to the left.

At this time, the setting unit 130 may adjust an angle of at least one of pan and tilt of the laser unit 110 based on information (for example, angle information) input from a user.

Fig. 3B is an example showing a case in which the detection region 10 and the region of interest 20 are set to overlap each other. Since the detection region 10 is included in the region of interest 20, the camera-integrated laser detection device 100 may detect a vehicle in at least one region of two regions and can provide the detected information.

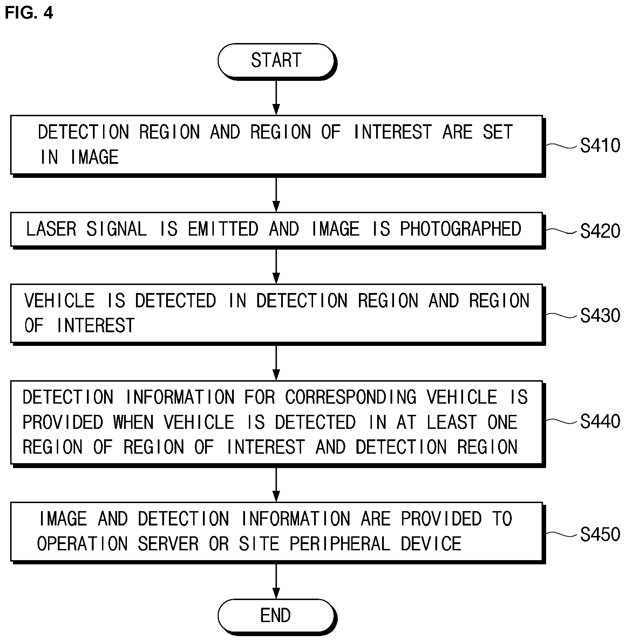

Fig. 4 is a diagram explaining an operation method of the camera-integrated laser detection device according to an embodiment of the present invention.

As shown in Fig. 4, the setting unit 130 of the camera-integrated laser detection device 100 according to an embodiment of the present invention sets the position and size of the detection region 10 and the region of interest 20 in an image (S410). At this time, since the setting unit 130 may display the detection region 10 and the region of interest 20 which are set, in a visually identifiable form and provide them in real time, the installation and setting work of the laser are easily performed.

After the setting, the laser unit 110 emits the laser signal and the photographing unit 120 photographs an image (S420).

Then, the control unit 140 detects the vehicle by using the reflection signal corresponding to the laser signal emitted to the detection region 10, processes the region of interest 20 of the image, and detects the vehicle (S430). At this time, the vehicle may be detected in only one region of the detection region 10 or the region of interest 20, or the vehicle may be detected in all both regions 10 and 20.

When the vehicle is detected in at least one region of the region of interest 20 and the detection region 10, the control unit 140 provides the detection information for corresponding vehicle (S440). At this time, the control unit 140 may provide the detection information of a vehicle (detection of vehicle, detection time, and the like) by using only one detection result of two detection results or combining two detection results. In addition, when all two detection results are present, the control unit 140 may provide the speed of the vehicle based on a distance between the region of interest 20 and the detection region 10.

Then, the output unit 150 provides an image and the detection information through a wired or wireless communication network to an operation server (not shown) or a site peripheral device (not shown) (S450).

As described above, according to the present invention, the laser and the camera are integrally configured and at least one detection result of the laser and the camera is used, it is possible to increase the detection efficiency of the vehicle and it is possible to increase the detection accuracy of the vehicle.

In addition, according to the present invention, even if the detection result is missing in one of the laser or the camera, since it is possible to acquire the detection information of a vehicle by using the remaining detection result, it is possible to minimize detection missing, and it is possible to increase the detection accuracy of the vehicle by combining the detection results of the laser and the camera.

Although the present invention has been described with reference to the embodiments illustrated in the drawings, this is merely exemplary, and it will be understood by those skilled in the art that various modifications and equivalent other embodiments are possible. Therefore, the true technical protection scope of the present invention will be defined by the technical spirit of the appended claims.

## Claims

1. A camera-integrated laser detection device comprising:
a laser unit that emits and receives a laser signal;
a photographing unit that photographs and provides a image;
a setting unit that sets a detection region for detecting a vehicle by using the laser signal and a region of interest for detecting the vehicle by using the image, in the image; and
a control unit that provides detection information on a corresponding vehicle, when the vehicle is detected in at least one region of the region of interest and the detection region.

2. The camera-integrated laser detection device according to Claim 1,
wherein the setting unit adjusts at least one of a position, a length, and a width of the detection region corresponding to at least one of an angle and a height of the laser unit.

3. The camera-integrated laser detection device according to Claim 1,
wherein the control unit provides the detection information of the vehicle by using at least one information of information detected by processing an image for the region of interest of the image and information detected through the laser signal in the detection region.

4. The camera-integrated laser detection device according to Claim 1,
wherein the control unit calculates and provides speed of the vehicle based on information detected in each of the region of interest and the detection region when the region of interest and the detection region are separated from each other by a predetermined distance.

5. The camera-integrated laser detection device according to Claim 4,
wherein a separation distance between the detection region and the region of interest is within 10 m.

6. The camera-integrated laser detection device according to Claim 1, further comprising:
an output unit that provides the detection information to a recognition device for recognizing a vehicle number based on an image corresponding to the detection information.

7. The camera-integrated laser detection device according to Claim 6,
wherein the recognition device photographs the image corresponding to the detection information, and recognizes the vehicle number from the image by using an image processing algorithm stored in advance.

8. An operation method of a camera-integrated laser detection device including a laser unit and a photographing unit, the method comprising:
emitting and receiving a laser signal through a laser unit to detect a vehicle, and photographing a image by using the photographing unit;
setting a detection region for detecting the vehicle by using the laser signal and a region of interest for detecting the vehicle by using the image, in the image; and
providing detection information for a corresponding vehicle when the vehicle is detected in at least one region of the region of interest and the detection region.

9. The operation method of a camera-integrated laser detection device according to Claim 8, further comprising:
adjusting at least one of a position, a length, and a width of the detection region corresponding to at least one of an angle and a height of the laser unit.

10. The operation method of a camera-integrated laser detection device according to Claim 8,
wherein in the providing the detection information of a vehicle, the detection information of a vehicle is provided by using at least one information of information detected by processing an image for the region of interest of the image and information detected through the laser signal in the detection region.

11. The operation method of a camera-integrated laser detection device according to Claim 8,
wherein in the providing the detection information of a vehicle, speed of the vehicle is calculated and provided based on information detected in each of the region of interest and the detection region when the region of interest and the detection region are separated from each other by a predetermined distance.

12. The operation method of a camera-integrated laser detection device according to Claim 11,
wherein a separation distance between the detection region and the region of interest is within 10 m.

13. The operation method of a camera-integrated laser detection device according to Claim 8, further comprising:
providing the detection information to a recognition device for recognizing a vehicle number based on an image corresponding to the detection information.

14. The operation method of a camera-integrated laser detection device according to Claim 13,
wherein the recognition device photographs the image corresponding to the detection information, and recognizes the vehicle number from the image by using an image processing algorithm stored in advance.
